# EUROPÄISCHE PATENTSCHRIFT

(11) **EP 0 826 300 B1**
(45) Veröffentlichungstag und Bekanntmachung des Hinweises auf die Patenterteilung: **06.02.2002**
(21) Anmeldenummer: 97112019.1
(22) Anmeldetag: 15.07.1997
(51) Int. Cl.: A01G 3/06

(54) **Akku-Rasenschere**
Battery-powered lawn shears
Cisailles à gazon fonctionnant sur batteries

(30) Priorität: 26.08.1996 DE 19634427
(43) Veröffentlichungstag der Anmeldung: 04.03.1998
(73) Patentinhaber: Wolf-Garten GmbH & Co. KG, 57518 Betzdorf (DE)
(72) Erfinder: Spies, Walther, Dr., 57080 Siegen (DE); Orthey, Gebhard, 57583 Nauroth (DE)
(74) Vertreter: Koch, Günther, Dipl.-Ing.

(56) Entgegenhaltungen:
- EP-A- 0 209 481
- DE-A- 2 319 219
- DE-A- 2 438 360
- DE-C- 3 916 145
- GB-A- 1 593 959
- US-A- 4 286 675

## Beschreibung

Die Erfindung bezieht sich auf eine Akku-Rasenschere der im Oberbegriff des Patentanspruchs 1 angegebenen Gattung. Eine derartige Rasenschere ist aus der DE 39 16 145 C bekannt. Hierbei ist der Scherenkopf gegenüber dem Griffgehäuse über ein Drehgelenk verschwenkbar, dessen Achse parallel zur Schnittebene verläuft. Der Elektroantriebsmotor ist entweder bevorzugt im Scherenkopf mit senkrecht zur Schnittebene stehender Drehachse angeordnet, oder er ist im Griffgehäuse untergebracht, und seine Antriebswelle wird durch das Drehgelenk hindurch auf das im Schneidkopf angeordnete Getriebe übertragen, wobei die Achse des Elektromotors parallel zur Schnittebene verläuft.

Das Ausführungsbeispiel mit im Scherenkopf angeordnetem Motor erfordert eine steil aufsteigende Vorderwand des Scherengehäuses, was die Arbeit unter überhängenden Pflanzenteilen erschwerte. Beim Ausführungsbeispiel mit im Griffgehäuse angeordnetem Motor bestand die Schwierigkeit, den Scherenkopf in jeder Stellung gegenüber dem Griffgehäuse ausgerichtet zu halten, damit die Kraftübertragung von dem im Griffgehäuse sitzenden Motor nach dem im Scherenkopf angeordneten Getriebe verkantungsfrei gesichert war.

Der Erfindung liegt die Aufgabe zugrunde, bei einer gattungsgemäßen Akku-Rasenschere eine Scherenkopf-Konstruktion mit geringerer Bauhöhe zu schaffen, bei der der Motor derart untergebracht ist, daß seine Antriebswelle parallel zur Schnittebene verläuft, wobei eine spielfreie Kraftübertragung bei einfachem Aufbau gewährleistet ist.

Gelöst wird die gestellte Aufgabe durch die im Kennzeichnungsteil des Patentanspruchs 1 angegebenen Merkmale. Dadurch, daß der Elektromotor mitsamt seinem Träger ein feststehender Bestandteil des Scherenkopfes ist, wird eine günstige Getriebeübertragung gewährleistet. Dadurch, daß der Motor samt seinem Träger im Einbauzustand jedoch vom Griffgehäuse umschlossen ist, kann der Scherenkopf sehr flach ausgebildet werden, weil er nur noch das Getriebe mit geringer Bauhöhe zu beherbergen hat. Durch die erfindungsgemäße Ausbildung wird es möglich, unter Verwendung der gleichen Grundbestandteile eine einfache Rasenschere zu schaffen, bei der gemäß Patentanspruch 2 Scherenkopf und Griffgehäuse starr miteinander verbunden sind, oder bei der gemäß Patentanspruch 3 der Scherenkopf gegenüber dem Griffgehäuse verschwenkbar ist, wobei das Drehgelenk von der Trägerhülse des Motors und der zylindrischen Führung des Griffgehäuses gebildet wird.

Es ist zwar aus der EP-A-0 209 481 bereits eine für Weinstöcke oder Bäume bestimmte Schere bekanntgeworden, bei der ein Elektromotor mit einer zur Schnittebene parallelen Achse in einem Griffgehäuse eingebaut ist, der über ein Kegelgetriebe Scherenblätter antreibt. Aber bei dieser bekannten Schere ist ein einheitliches zylindrisches Gehäuse zur Aufnahme von Batterie, Elektromotor und Getriebe vorgesehen, und dieses zylindrische Gehäuse dient als Handgriff, so daß bei Inbetriebnahme die die Schere erfassende Hand über die Schnittebene vorsteht, während bei den Scheren jener Gattung, auf die sich die Erfindung bezieht, durch die angegebene Ausbildung von Griffgehäuse und Scherenkopf ein unbehinderter Schnitt möglich ist.

Die vorteilhafte Ausbildung der erfindungsgemäßen Rasenschere mit schmalem Griffgehäuse und flachem Scherenkopf ist beiden Ausführungsformen mit festem oder drehbarem Scherenkopf eigen. Die Schwenkanordnung des Scherenkopfes erfordert keine zusätzlichen Lagerelemente, da das Lager in beiden Fällen von Motorträgerhülse bzw. zylindrischer Führung im Griffgehäuse gebildet ist.

Ausgestaltungen der Erfindung ergeben sich aus den Unteransprüchen.

Nachstehend werden zwei Ausführungsbeispiele der Erfindung anhand der Zeichnung beschrieben. In der Zeichnung zeigen:
- Fig. 1: zeigt einen Längsschnitt einer erfindungsgemäß ausgebildeten Akku-Rasenschere mit festem Scherenkopf;
- Fig. 2: zeigt einen Schnitt längs der Linie II-II gemäß Fig. 1;
- Fig. 3: zeigt einen der Fig. 1 entsprechenden Längsschnitt einer erfindungsgemäß ausgebildeten Akku-Rasenschere mit drehbarem Scherenkopf;
- Fig. 4: ist ein Schnitt nach der Linie IV-IV gemäß Fig. 3;
- Fig. 5: ist eine Draufsicht der Getriebeanordnung zwischen Motor und Untermesser für die Rasenschere gemäß Fig. 1 und 3.

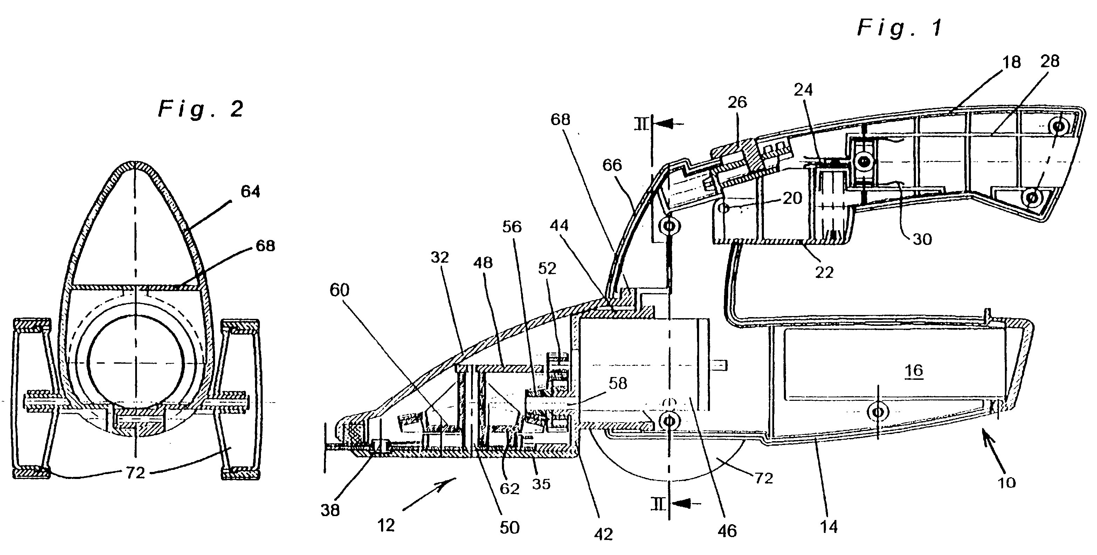

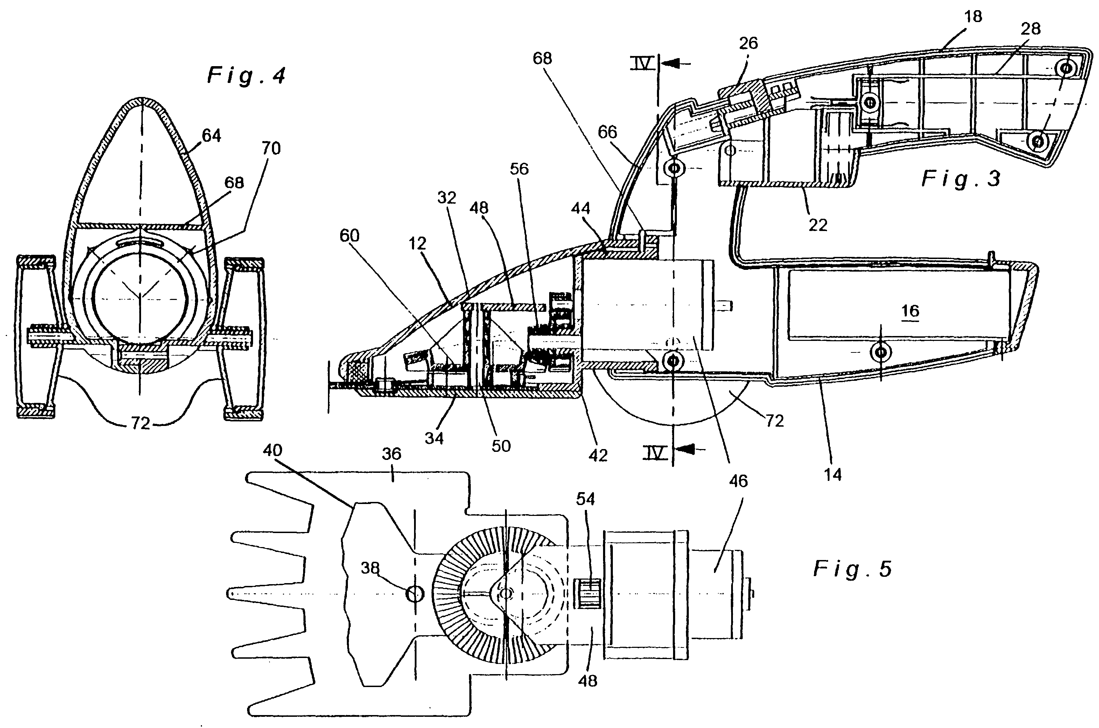

Die Rasenschere besteht aus einem Griffgehäuse 10 und einem hiermit entweder starr (Fig. 1 und 2) oder drehbar (Fig. 3 und 4) verbundenen Scherenkopf 12. Das Griffgehäuse 10 ist im wesentlichen U-förmig aus zwei Halbschalen aufgebaut, wobei der untere Schenkel 14 des Gehäuses einen Akku 16 aufnimmt und der obere Schenkel 18 die Schalteranordnung. Diese besteht aus einem um eine Achse 20 schwenkbaren, federnd abgestützten Schaltglied 22, das durch den Zeigefinger betätigbar ist und beim Anziehen die Schaltkontakte 24 schließt. Ein Verriegelungsschieber 26 verhindert in der aus Fig. 1 und 3 ersichtlichen Stellung ein unbeabsichtigtes Einschalten. Der obere Schenkel 18 des Griffgehäuses weist eine zylindrische Führungshülse 28 zum Einstecken des abgekröpften Endes eines Führungsstiels auf. Schaltkontakte 30 innerhalb der Hülse, die parallel zu den Schaltkontakten 24 liegen, ermöglichen über eine entsprechende Leitungsverbindung ein Schalten vom Führungsstiel aus.

Der Scherenkopf 12 weist eine Haube 32 und eine Grundplatte 34 auf. Die Grundplatte 34 trägt das kammartige, fest angeordnete Untermesser 36 und schwenkbar um einen Drehzapfen 38 das hiermit zusammenwirkende, kammartige Obermesser 40. Die Haube 32 ist nach vorn hin abgeflacht und auf der dem Griffgehäuse 10 zugewandten Seite durch eine Stirnplatte 42 abgeschlossen, die mit der Grundplatte 34 verbunden ist und eine angeformte, nach hinten in das Griffgehäuse einstehende Trägerhülse 44 aufweist, in der ein Elektromotor 46 mit parallel zur Schnittebene verlaufender Achse festgelegt ist. An der Stirnplatte 42 ist eine in das Haubeninnere einstehende Lagerplatte 48 festgelegt. Diese haltert das obere Ende eines Lagerbolzens 50, dessen unteres Ende in der Grundplatte 34 fixiert ist.

Die Welle 52 des Elektromotors 46 steht durch eine Öffnung der Stirnplatte 42 hindurch und trägt ein Stirnrad 54, das mit einem mit einem Kegelrand 56 verbundenen, auf einer Achse 58 gelagerten Stirnrad kämmt. Auf dem Lagerbolzen 50 ist ein Tellerrad 60 drehbar gelagert, dessen Zahnkranz mit dem Kegelrad 56 kämmt. Ein am Tellerrad 60 angebrachter, nach unten vorstehender Exzenter 62 greift in eine Ausnehmung des Obermessers ein und formt die Drehbewegung in eine oszillierende Bewegung des Obermessers 40 um.

Der Mittelabschnitt 64 des Griffgehäuses 10 ist, wie aus Fig. 2 und 4 ersichtlich, im Querschnitt eiförmig ausgebildet und trägt den Scherenkopf 12, der in ein Einsatzloch der Vorderwand 66 einsteht. Die Einsatzöffnung der Vorderwand 66 ist kreisförmig ausgebildet und liegt konzentrisch zur Achse des Motors 46. Der Übergangsabschnitt des Griffgehäuses 10 weist einen Quersteg 68 auf.

Der Elektromotor 46 wird von einer Trägerhülse 44 aufgenommen, die mit der Stirnplatte 42 verbunden ist und Teil des Scherenkopfes 12 ist. Die Trägerhülse 44 steht durch die Vorderwand 66 des Griffgehäuses 10 in dieses ein und ist in einer zylindrischen Führung des Griffgehäuses 10 gelagert. Bei dem Ausführungsbeispiel nach Fig. 1 und 2 ist der in das Griffgehäuse 10 einstehende Teil des Scherenkopfes 12 mit diesem fest verbunden, indem die Trägerhülse 44 in seiner zylindrischen Führung am Quersteg 68 fixiert ist.

Die Schere nach dem Ausführungsbeispiel gemäß Fig. 3 - 5 besitzt den gleichen Grundaufbau, wobei die Trägerhülse 44 in der zylindrischen Führung nicht festgelegt, sondern in dieser drehbar gelagert und axial gesichert ist. Hierbei weist die den Elektromotor 46 halternde Trägerhülse 44 Rastnocken 70 auf, die mit einer Rastausnehmung des Quersteges 68 (vgl. Fig. 4) zusammenwirken, um den Scherenkopf 12 in den 45°-Rasten zu fixieren. Der Scherenkopf 12 ist von der Mittelstellung gemäß Fig. 3 und 4 nach beiden Seiten um je 90° schwenkbar.

Im Griffgehäuse sind Laufrollen 72 gelagert, mit denen die Schere bei jeder Schwenkstellung des Scherenkopfes am Boden abgestützt werden kann.

Wie aus den Fig. 1 und 3 ersichtlich, wird durch die oben beschriebene Anordnung und Lagerung des Elektromotors 46 erreicht, daß die Haube 32 des Scherenkopfes 12 flach verlaufend ausgebildet werden kann,, so daß Hindernisse leicht unterfahren werden können. Die Haube 32 nähert sich am Vorderende der Grundplatte und lagert zusammen mit der Grundplatte die Messer.

Durch die erfindungsgemäße Ausbildung wird es möglich, mit nur geringen Abwandlungen unter Beibehaltung der Hauptbestandteile entweder eine Handgrasschere mit festem oder mit drehbarem Scherenkopf zu schaffen. Dadurch, daß der Elektromotor 46 in das Griffgehäuse eingezogen ist, kann der Scherenkopf 12 flacher als bisher möglich ausgebildet werden.

### Bezugszeichenliste

- 10: Griffgehäuse
- 12: Scherenkopf
- 14: unterer Schenkel
- 16: Akku
- 18: oberer Schenkel
- 20: Achse
- 22: Schaltglied
- 24: Schaltkontakte
- 26: Verriegelungsschieber
- 28: zyl.Führungshülse
- 30: Schaltkontakte
- 32: Haube
- 34: Grundplatte
- 36: Untermesser
- 38: Drehzapfen
- 40: Obermesser
- 42: Stirnplatte
- 44: Trägerhülse
- 46: Elektromotor
- 48: Lagerplatte
- 50: Lagerbolzen
- 52: Welle
- 54: Stirnrad
- 56: Kegelrad
- 58: Achse
- 60: Tellerrad
- 62: Exzenter
- 64: Mittelabschnitt
- 66: Vorderwand
- 68: Quersteg
- 70: Rastnocken
- 72: Laufrollen

## Patentansprüche

1. Akku-Rasenschere mit
- einem Griffgehäuse (10) und mit
- einem Scherenkopf (12), aus dem ein festes Untermesser (36) und ein um eine senkrecht zur Schnittebene stehende Achse (38) oszillierendes Obermesser (40) vorstehen;
bei der das Griffgehäuse (10) einen Fingerschalter (22) mit Sicherung (26) im oberen Gehäuseteil und einen Akku (16) im unteren Gehäuseteil aufweist, und
bei der der Scherenkopf (12) ein durch Elektromotor (46) angetriebenes Tellerrad (60) aufweist, das mit einem Exzenter (62) in eine Ausnehmung des oszillierenden Messers (40) eingreift und dieses antreibt,
**dadurch gekennzeichnet, daß** der Elektromotor (46) mit seiner Achse parallel zur Schnittebene angeordnet und über ein Kegelrad (56) mit dem Tellerrad (60) antriebsmäßig gekuppelt ist, daß der Elektromotor (46) von einer Trägerhülse (44) gehaltert ist, die ein Bestandteil des Scherenkopfes (12) ist und durch eine Ausnehmung der Vorderwand (66) des Griffgehäuses (10) in dieses einsteht und in einer zylindrischen Führung des Griffgehäuses (10) gelagert ist.

2. Akku-Rasenschere nach Anspruch 1,
**dadurch gekennzeichnet, daß** die Trägerhülse (44) gegenüber dem Griffgehäuse (10) festgelegt ist.

3. Akku-Rasenschere nach Anspruch 1,
**dadurch gekennzeichnet, daß** die Trägerhülse (44) in der zylindrischen Führung des Griffgehäuses (10) drehbar gelagert und axial gesichert ist.

4. Akku-Rasenschere nach Anspruch 3,
**dadurch gekennzeichnet, daß** die Drehachse der Trägerhülse (44) mit der Drehachse des Elektromotors (46) zusammenfällt.

5. Akku-Rasenschere nach Anspruch 1 oder 2,
**dadurch gekennzeichnet, daß** das Griffgehäuse (10) in seinem den Elektromotor (46) aufnehmenden Abschnitt im Querschnitt eiförmig ausgebildet ist.

6. Akku-Rasenschere nach Anspruch 1 oder 2,
**dadurch gekennzeichnet, daß** das Griffgehäuse U-förmig ausgebildet ist, wobei der untere Schenkel (14) den Akku (16) aufnimmt und der obere Schenkel (18) außer der Schaltvorrichtung eine zylindrische Führungshülse (28) für das abgekröpfte Ende eines Führungsstabes trägt.

7. Akku-Rasenschere nach Anspruch 1 oder 2,
**dadurch gekennzeichnet, daß** der Mittelabschnitt (64) des Griffgehäuses (10) den Elektromotor (46), ausgerichtet auf den unteren Schenkel (14) des Griffgehäuses (10), aufnimmt.

8. Akku-Rasenschere nach Anspruch 6,
**dadurch gekennzeichnet, daß** die zylindrische Führungshülse (28) Schaltkontakte (30) aufweist, die parallel zu den Schaltkontakten (24) des Fingerschaltgliedes (22) liegen.

9. Akku-Rasenschere nach Anspruch 1 oder 2,
**dadurch gekennzeichnet, daß** der Scherenkopf (12) durch eine obere, flach nach vorn abfallende, schalenartige Haube (32) und eine untere, flache Grundplatte (34) abgeschlossen ist.

10. Akku-Rasenschere nach Anspruch 1 oder 2,
**dadurch gekennzeichnet, daß** das Griffgehäuse (12) im Übergangsabschnitt Lagerachsen für Laufrollen (72) trägt.

11. Akku-Rasenschere nach Anspruch 1 oder 2,
**dadurch gekennzeichnet, daß** das Tellerrad (60) um einen Bolzen (50) drehbar ist, der von der Grundplatte (34) und einer Lagerplatte (48) abgestützt ist, die am Motorträger (42, 44) fixiert ist.

12. Akku-Rasenschere nach Anspruch 1 oder 2,
**dadurch gekennzeichnet, daß** der Mittelabschnitt (64) des Griffgehäuses einen Quersteg (68) aufweist.

13. Akku-Rasenschere nach den Ansprüchen 1, 2 und 12,
**dadurch gekennzeichnet, daß** die Trägerhülse (44) am Quersteg (68) fixiert ist.

14. Akku-Rasenschere nach den Ansprüchen 1 und 3,
**dadurch gekennzeichnet, daß** die Trägerhülse (44) Rastnocken (70) trägt, die mit Rastausnehmungen des Griffgehäuses (10) zusammenwirken.

15. Akku-Rasenschere nach den Ansprüchen 1, 3 und 14,
**dadurch gekennzeichnet, daß** die Rastausnehmungen in dem Quersteg (68) angeordnet sind.

## Claims

1. Battery-powered lawn trimmer having
- a handle enclosure (10) and having
- a trimming head (12) from which protrude a fixed lower blade (36) and an upper blade (40) which oscillates about an axis (38) perpendicular to the cutting plane;
on which the handle enclosure (10) incorporates a finger-operated switch (22) having a fuse (26) in the upper part of the enclosure and a storage battery (16) in the lower part of the enclosure, and
on which the trimming head (12) incorporates a ring gear (60) powered by electric motor (46), said ring gear (60) engaging by an eccentric cam (62) in a recess in the oscillating blade (40) and driving the latter,
**characterised in that** the electric motor (46) is arranged with its axis parallel to the cutting plane and is operatively coupled via a bevel gear (56) to the ring gear (60), that the electric motor (46) is held in place by a bracket bushing (44) which forms part of the trimming head (12) and projects into the handle enclosure (10) through a recess in the front wall (66) thereof and is mounted in a cylindrical guide on the handle enclosure (10).

2. Battery-powered lawn trimmer according to claim 1, **characterised in that** the bracket bushing (44) is fixed with respect to the handle enclosure (10).

3. Battery-powered lawn trimmer according to claim 1, **characterised in that** the bracket bushing (44) is rotatably mounted and axially secured in the cylindrical guide on the handle enclosure (10).

4. Battery-powered lawn trimmer according to claim 3, **characterised in that** the rotational axis of the bracket bushing (44) coincides with the rotational axis of the electric motor (46).

5. Battery-powered lawn trimmer according to claim 1 or 2, **characterised in that** the handle enclosure (10) is egg-shaped in cross-section in the portion thereof that accommodates the electric motor (46).

6. Battery-powered lawn trimmer according to claim 1 or 2, **characterised in that** the handle enclosure (10) is a U-shaped construction, the lower side-piece (14) accommodating the storage battery (16) and the upper side-piece (18) carrying, in addition to the switching device, a cylindrical guide bushing (28) for the right-angled extremity of a guide rod.

7. Battery-powered lawn trimmer according to claim 1 or 2, **characterised in that** the central section (64) of the handle enclosure (10) accommodates the electric motor (46), aligned with the lower side-piece (14) of the handle enclosure (10).

8. Battery-powered lawn trimmer according to claim 6, **characterised in that** the cylindrical guide bushing (28) incorporates switch contacts (30) which are situated parallel to the switch contacts (24) of the finger-operated switching element (22).

9. Battery-powered lawn trimmer according to claim 1 or 2, **characterised in that** the trimming head (12) is terminated by an upper, shell-like hood (32) which falls gradually away towards the front, and by a lower, flat base plate (34).

10. Battery-powered lawn trimmer according to claim 1 or 2, **characterised in that** in the transition section the handle enclosure (12) carries mounting shafts for runners (72).

11. Battery-powered lawn trimmer according to claim 1 or 2, **characterised in that** the ring gear (60) is adapted to rotate about a pin (50) which is supported by the base plate (34) and by a bearing plate (48) fixed on the motor bracket (42, 44).

12. Battery-powered lawn trimmer according to claim 1 or 2, **characterised in that** the central section (64) of the handle enclosure incorporates a transverse land (68).

13. Battery-powered lawn trimmer according to claims 1, 2 and 12, **characterised in that** the bracket bushing (44) is fixed in place on the transverse land (68).

14. Battery-powered lawn trimmer according to claims 1 and 3, **characterised in that** the bracket bushing (44) carries locking cams (70) which cooperate with latching recesses on the handle enclosure (10).

15. Battery-powered lawn trimmer according to claims 1, 3 and 14, **characterised in that** the latching recesses are arranged in the transverse land (68).

## Revendications

1. Cisaille à gazon fonctionnant sur batterie avec
- un boîtier de poignée (10) et avec
- une tête de cisaille (12) de laquelle dépassent une lame inférieure (36) fixe et une lame supérieure (40) oscillant autour d'un axe (38) perpendiculaire au plan de coupe ;
dans laquelle le boîtier de poignée (10) présente un interrupteur au doigt (22) avec blocage (26) dans la tête du boîtier et une batterie (16) dans la partie inférieure du boîtier et dans laquelle la tête de cisaille (12) présente une roue à plateau (60) entraînée par un moteur électrique (46), qui s'engage avec un excentrique (62) dans un évidement de la lame (40) oscillante et entraîne celle-ci, **caractérisée en ce que** le moteur électrique (46) est disposé avec son axe parallèlement au plan de coupe et est couplé pour l'entraînement avec la roue à plateau (60) au moyen d'une roue conique (56), **en ce que** le moteur électrique (46) est supporté par une douille support (44), qui est un élément de la tête de cisaille (12), et s'engage dans le boîtier de poignée (10) par un évidement de la paroi avant (66) de ce boîtier et est logée dans un guide cylindrique du boîtier de poignée (10).

2. Cisaille à gazon fonctionnant sur batterie selon la revendication 1, **caractérisée en ce que** la douille support (44) est fixée par rapport au boîtier de poignée (10).

3. Cisaille à gazon fonctionnant sur batterie selon la revendication 1, **caractérisée en ce que** la douille support (44) est logée de façon pivotante dans le guide cylindrique du boîtier de poignée (10)et est bloquée dans le sens axial.

4. Cisaille à gazon fonctionnant sur batterie selon la revendication 3, **caractérisée en ce que** l'axe de rotation de la douille support (44) coïncide avec l'axe de rotation du moteur électrique (46)

5. Cisaille à gazon fonctionnant sur batterie selon la revendication 1 ou 2, **caractérisée en ce que** le boîtier de poignée (10) est vu en coupe conçu en forme d'oeuf dans sa partie recevant le moteur électrique (46).

6. Cisaille à gazon fonctionnant sur batterie selon la revendication 1 ou 2, **caractérisée en ce que** le boîtier de poignée est conçu en forme de U, la branche (14) inférieure recevant la batterie (16) et la branche (18) supérieure supportant outre le dispositif de commutation un manchon de guidage (28) cylindrique pour l'extrémité coudée d'une barre de guidage.

7. Cisaille à gazon fonctionnant sur batterie selon la revendication 1 ou 2, **caractérisée en ce que** la partie centrale (64) du boîtier de poignée (10) reçoit le moteur électrique (46) orienté vers la branche (14) inférieure du boîtier de poignée (10).

8. Cisaille à gazon fonctionnant sur batterie selon la revendication 6, **caractérisée en ce que** la manchon de guidage (28) cylindrique présente des contacts de commutation (30) qui sont parallèles aux contacts de commutation (24) de l'interrupteur au doigt (22).

9. Cisaille à gazon fonctionnant sur batterie selon la revendication 1 ou 2, **caractérisée en ce que** la tête (12) est terminée par un capot (32) supérieur, descendant à plat vers l'avant et en forme de coque et une plaque d'assise (34) plate inférieure.

10. Cisaille à gazon fonctionnant sur batterie selon la revendication 1 ou 2, **caractérisée en ce que** le boîtier de poignée (12) supporte dans la partie de transition des axes de support pour des galets de roulement (72).

11. Cisaille à gazon fonctionnant sur batterie selon la revendication 1 ou 2, **caractérisée en ce que** la roue à plateau (60) peut pivoter autour d'un boulon (50) qui est soutenu par la plaque d'assise (34) et une plaque d'appui (48), qui est fixée sur le support moteur (42, 44).

12. Cisaille à gazon fonctionnant sur batterie selon la revendication 1 ou 2, **caractérisée en ce que** la partie centrale (64) du boîtier de poignée présente une barre transversale (68).

13. Cisaille à gazon fonctionnant sur batterie selon les revendications 1, 2 et 12, **caractérisée en ce que** la douille support (44) est fixée sur la barre transversale (68).

14. Cisaille à gazon fonctionnant sur batterie selon les revendications 1 et 3, **caractérisée en ce que** la douille support (44) supporte des cames d'encliquetage (70) qui coopèrent avec des évidements d'encliquetage du boîtier de poignée (10).

15. Cisaille à gazon fonctionnant sur batterie selon les revendications 1, 3 et 14, **caractérisée en ce que** les évidements d'encliquetage sont disposés dans la barre transversale (68).
